Europäisches Patentamt

European Patent Office

Office européen des brevets

(19)

(11) Veröffentlichungsnummer : **0 339 375 B1**

(12)

# EUROPÄISCHE PATENTSCHRIFT

(45) Veröffentlichungstag der Patentschrift :
**01.07.92 Patentblatt 92/27**

(51) Int. Cl.$^5$ : **B65G 65/23, A22C 11/00**

(21) Anmeldenummer : **89106541.9**

(22) Anmeldetag : **12.04.89**

---

(54) **Maschine zum Transportieren von Fleisch.**

---

(30) Priorität : **18.04.88 DE 3812931**

(43) Veröffentlichungstag der Anmeldung :
**02.11.89 Patentblatt 89/44**

(45) Bekanntmachung des Hinweises auf die
Patenterteilung :
**01.07.92 Patentblatt 92/27**

(84) Benannte Vertragsstaaten :
**AT CH DE ES FR GB IT LI NL**

(56) Entgegenhaltungen :
**CH-A- 570 915**
**DE-A- 3 518 374**
**DE-A- 3 621 409**

(56) Entgegenhaltungen :
**DE-B- 1 089 330**
**FR-A- 1 587 847**
**FR-A- 1 599 048**
**FR-A- 2 540 472**

(73) Patentinhaber : **Albert Handtmann**
**Maschinenfabrik GmbH & Co. KG**
**Birkenallee 25-29**
**W-7950 Biberach a.d. Riss 1 (DE)**

(72) Erfinder : **Zinser, Georg, Dipl.-Ing.**
**Am Ränkle 8**
**W-7951 Winterstettenstadt (DE)**

(74) Vertreter : **Patentanwälte Grünecker,**
**Kinkeldey, Stockmair & Partner**
**Maximilianstrasse 58**
**W-8000 München 22 (DE)**

**Beschreibung**

Die Erfindung betrifft eine Maschine zum Transportieren von Fleisch, insbesondere von Wurstbrät, mit einem auf der Oberseite der Maschine angeordneten Vorratstrichter, ferner mit einem auf einer maschinenfesten horizontalen Achse schwenkbar gelagerten Hebebalken, an welchem eine horizontal angeordnete Kippachse drehbar gelagert ist, an welcher ein Tragrahmen für einen fahrbaren Wurstbrätbehälter kippbar befestigt ist.

Aus der Praxis bekannte Maschinen dieser Art sind zur Verarbeitung großer Mengen von Fleisch- oder Wurstbrät pro Zeiteinheit ausgelegt; insbesondere Maschinen zum Portionieren und Abdrehen vom Würsten sind derartige Hochleistungsmaschinen. Dementsprechend groß ist die Kapazität des Wurstbrätbehälters, der mit dem Brät beschickt, auf dem Boden herangerollt, sodann hochgehoben und über dem Vorratstrichter ausgekippt wird. Dieses Anheben, Kippen und anschließende Absenken des Wurstbrätbehälters kann aufgrund des hohen Gewichtes des eingefüllten Bräts nicht manuell, sondern muß maschinell betätigt durchgeführt werden.

Dabei ist zu beachten, daß der Wurstbrätbehälter anfangs im wesentlichen horizontal angehoben werden muß, um ein vorzeitiges Ausfließen des eingefüllten Wurstbräts zu verhindern. Erst ab einer bestimmten Hubstellung darf das Kippen des Wurstbrätbehälters erfolgen. Diese Kippbewegung wird in der Praxis durch einen Anschlag bewirkt, auf den der Wurstbrätbehälter, beispielsweise mit seiner Oberkante, während des Anhebens auftrifft und somit zum Kippen in Richtung des Vorratstrichter gezwungen wird.

Das Auftreffen auf den Anschlag erfolgt, insbesondere bei schnell arbeitenden Maschinen mit hoher Hubgeschwindigkeit des Hebebalkens, in abrupter Weise, so daß der Wurstbrätbehälter entsprechend plötzlich und übermäßig gekippt oder zu Pendelbewegungen angeregt wird, wobei die Gefahr besteht, daß das eingefüllte Wurstbrät, insbesondere dünnflüssiges Brät, wie beispielsweise Kalbsbrät, vorzeitig aus dem Wurstbrätbehälter ausfließt. Außerdem besteht die Gefahr, daß der Anschlag nach längerer Betriebsdauer bricht und auf diese Weise Unfälle hervorruft. Ferner ist es praktisch unmöglich, den Wurstbrätbehälter konstant und störungsfrei parallel zu sich selbst anzuheben und den Beginn des Kippvorganges sowie den Ablauf desselben, d.h. das Erreichen bestimmter Kippwinkel in bestimmten Hubpositionen, wunschgemäß zu verstellen.

Es ist Aufgabe der Erfindung, eine Maschine der eingangs genannten Art so weiterzubilden, daß ein sicheres und gafahrloses Anheben des Hebebalkens und Kippen des Wurstbrätsbehälter gewährleistet ist.

Dies wird erfindungsgemäß dadurch erreicht, daß von der maschinenfesten Achse zur Kippachse ein erster, den Wurstbrätbehälter beim Anheben und Absenken des Hebebalkens parallel zu sich selbst führender Kettenzug mit einer Übersetzung 1:1, und außerdem ein zweiter, das Kippen des Wurstbrätbehälters bewirkender verschränkter Kettenzug mit einer Übersetzung größer als 1 geführt ist, wobei die Antriebskettenräder auf der maschinenfesten Achse frei drehbar, jedoch wechselweise mit dieser kuppelbar gelagert sind, während die Abtriebskettenräder auf der Kippachse undrehbar befestigt sind.

Ist ein feststehendes Kettenrad über einen nicht-verschränkten Kettenzug mit einem drehbar gelagerten Kettenrad verbunden, so wird letzteres bei Verschwenkung um ersteres eine Drehbewegung in einem dem Drehsinn der Verschwenkbewegung entgegengesetzten Drehsinn durchführen. Beim verschränktem Kettenzug erfolgen die Drehbewegung und die Verschwenkbewegung des verschwenkten Kettenrades in gleiche Drehrichtung. Im vorliegenden Fall beträgt das Übersetzungsverhältnis zwischen den Kettenrädern des ersten, nicht verschränkten Kettenzuges 1:1, so daß sich das verschwenkte Kettenrad, d.h. das Abtriebskettenrad, im Verhältnis von 1:1 zu seiner Verschwenkbewegung und damit der des Hebebalkens, jedoch mit entgegengesetztem Drehsinn, dreht, so daß sich beide Bewegungen ausgleichen und somit das Abtriebskettenrad seine Drehstellung während der gesamten Verschwenkbewegung nicht ändert. Auf diese Weise wird der Wurstbrätbehälter während des Anhebens und Absenkens des Hebebalkens parallel zu sich selbst geführt. Voraussetzug dafür ist, daß das Antriebskettenrad des ersten Kettenzuges mit der maschinenfesten Achse, nicht jedoch über dieselbe mit dem Antriebskettenrad des zweiten Kettenzuges, gekuppelt ist. Wird jedoch das Antriebskettenrad des ersten Kettenzuges von der maschinenfesten Achse abgekuppelt und dafür das Antriebskettenrad des zweiten Kettenzuges eingekuppelt und auf diese Weise der erste Kettenzug außer Funktion gesetzt, dann werden bei dem gewählten Übersetzungsverhältnis größer als 1 die Drehbewegung und die Verschwenkbewegung des Abtriebskettenrades des zweiten Kettenzuges, da dieser verschränkt ist, addiert, so daß sich das Abtriebskettenrad im Drehsinn der Verschwenkbewegung des Hebebalkens dreht. Auf diese Weise wird der Wurstbrätbehälter in Richtung des Vorratstrichters gekippt und das Wurstbrät in das Maschineninnere eingefüllt.

Folglich wird der Wurstbrätbehälter während des Anhebens und Absenkens zwangsweise derart geführt, daß er genau und unveränderlich parallel zu sich selbst bewegt sowie seine Kippbewegung zu einem durch Festlegen des entsprechenden Antriebskettenrades auf den maschinenfesten Achse vorbestimmten Zeitpunkt eingeleitet und mit optimalem Bewegungsablauf ohne Gefahr von Pendelbewegungen oder übermäßigem Kippen mit vorzeitigem Auslaufen des Wurstbrätes durchgeführt werden kann. Unfallgefahren sind durch den Wegfall der Anschläge ausgeschlossen. Durch Austauschen der entsprechenden Kettenräder kann beispielsweise der Kipp-Bewegungsablauf des Wurstbrätbehälters und die Größe seiner Kippwinkel optimal eingestellt werden. Dabei ist es möglich, die erfindungsgemäße Maschine an das jeweilige Fließ- bzw. Einkippverhalten des Bräts anzupassen.

Zur Erzielung einer einfachen Konstruktion sind vorzugsweise die beiden Antriebskettenräder und eines der Abtriebskettenräder verzahnungstechnisch gleich ausgebildet, während das zum zweiten Kettenzug gehörende Kettenrad eine kleinere Zähnezahl als die anderen Kettenräder aufweist.

Vorteilhafterweise sind die beiden Antriebskettenräder auf der maschinenfesten Achse im Abstand zueinander gelagert, wobei zwischen den beiden Antriebskettenrädern eine mit der Achse undrehbar verbundene, aber axial verschiebbare Kupplungsscheibe angeordnet ist.

Dabei ist eine Ausgestaltung günstig, gemäß welcher die Kupplungsscheibe auf beiden Seiten und die Antriebskettenräder auf der jeweils der Kupplungsscheibe zugewandten Seite korrespondierende Axialverzahnungen aufweisen und die maximale Breite der Kupplungsscheibe etwa dem Abstand zwischen den beiden Antriebskettenrädern entspricht. Mit der Kupplungsscheibe ist es in einfacher Weise möglich, die Antriebskettenräder mit der maschinenfesten Achse zu kuppeln bzw. von dieser zu entkuppeln. Die Breite der Kupplungsscheibe ist so bemessen, daß zu keinem Zeitpunkt beide Antriebskettenräder von der maschinenfesten Achse abgekuppelt ist. Auf diese Weise wird sichergestellt, daß der Wurstbrätbehälter immer eine genau definierte Stellung einnimmt.

In diesem Zusammenhang ist es vorteilhaft, die Axialverzahnungen in der Art von abgeflachten Sägezähnen auszubilden, wobei die Schrägen der Sägezähne der jeweils im Verzahnungseingriff befindlichen Axialverzahnungen der Kupplungsscheibe und jeweils eines der Antriebskettenräder in Richtung einer in dem in diesem Antriebskettenrad auftretenden Kraft verlaufen, die Kupplungsscheibe mit den Abflachungen ihrer Sägezähne an den Abflachungen der Sägezähne des jeweils anderen Antriebskettenrades anliegt, und die Axialverzahnungen derart mit ungleicher Teilung ausgebildet sind, daß nur in "bestimmten Relativstellungen" der einander zugewandten Axialverzahnungen ein Verzahnungseingriff möglich ist.

Diese Kraft kann eine beim Verschwenken des Hebebalkens in dem mit der Kupplungsscheibe in Verzahnungseingriff befindlichen Antriebkettenrad auftretende, vom jeweiligen Kettenzug ausgeübte Zugkraft sein, die ein selbsttätiges Umschalten der Kupplungsscheibe bis zum Verzahnungseingriff mit dem jeweils anderen Antriebskettenrad bewirkt.

Ferner kann die Kraft eine als Ergebnis des Aufeinandertreffens von zwei Anschlägen auftretende Schubkraft sein, wobei die Anschläge an den beiden Antriebskettenrädern befestigt sind und beim Aufeinandertreffen am Ende der Relativbewegung der Antriebskettenräder ein zwangsweises Umschalten der Kupplungsscheibe bewirken.

Vorzugsweise ist das Antriebskettenrad und/oder das Abtriebskettenrad wenigstens einer der beiden Kettenzüge winkelverstellbar auf der zugeordneten Achse befestigt. Durch entsprechende Winkelverstellung kann der Zeitpunkt des Umschaltens vom ersten Kettenzug auf den zweiten Kettenzug eingestellt und somit optimal an die entsprechenden Verhältnisse angepaßt werden.

Vorteilhafterweise ist der Hebebalken hohl ausgebildet und die beiden Kettenzüge sind mit ihren Kettenrädern und Achsen im Hohlraum innerhalb des Hebebalkens angeordnet. Dabei wird jegliche Verletzungsgefahr für das Bedienungspersonal ausgeschaltet und sichergestellt, daß die Maschine vollkommen störungsfrei und funktionssicher betrieben werden kann.

Vorzugsweise ist der Tragrahmen für die Aufnahme des Wurstbrätbehälters formschlüssig mit diesem verbindbar.

Um den Hebebalken in einfacher und sicherer Weise zu verschwenken, kann am maschinenseitigen Ende des Hebebalkens eine die machinenfeste Achse einschließende Hohlachse befestigt sein, an deren Ende ein Kurbelarm angebracht ist, an welchem die Kolbenstange einer hydraulischen Zylinder-Kolbeneinheit angreift.

Vorteilhafterweise ist zwichen dem Kurbelarm und dem Ende der Kolbenstange eine Schwinge eingeschaltet. Damit wird eine robuste und platzsparende Bauweise der Zylinder-Kolbeneinheit und trotzdem ein ausreichender Schwenkwinkel des Hebebalkens erzielt.

Um die von der Schwinge beim Ausfahren des Kolbenstangenendes auf dieses ausgeübten Kippkräfte abzufangen, kann zwischen der Schwinge und dem Ende der Kolbenstange ein Gleitschuh eingeschaltet sein, der an einer an der Maschine befestigen vertikalen Gleitführung anliegt.

Vorzugsweise ist der gesamte Antrieb für den Hebebalken in einem an der Maschine abgebrachten Antriebsgehäuse angeordnet, in welches ein Ende der Hohlachse ragt. Es werden somit die gleichen Vorteile wie mit dem hohl ausgebildeten Hebebalken erzielt.

Nachstehend ist die Erfindung anhand eines bevorzugten Ausführungsbeispiels unter Bezugnahme auf die Zeichnung näher beschrieben. Es zeigen:

Fig.1 eine Seitenansicht des bevorzugten Ausführungsbeispiels der erfindungsgemäßen Maschine,

Fig.2 eine Stirnansicht der in Fig. 1 gezeigten Maschine bei Betrachtung von rechts in Fig. 1,

Fig.3 einen Längsschnitt des in Fig. 1 und 2 gezeigten Hebebalkens, einschließlich des Antriebs dafür
Fig.4 einen Schnitt entlang der Linie IV-IV in Fig. 3,
Fig.5 einen Schnitt entlang der Linie V-V in Fig. 3,
Fig.6 eine vergrößerte Darstellung des in Fig. 3 mit "A" bezeichneten Ausschnittes, und
Fig.7A und 7B Abwicklungen von Axialverzahnungen der Antriebs-Kettenräder von im Hebebalken angeordneten Kettenzügen sowie einer zwischen den Kettenrädern angeordneten Kupplungsscheibe in verschiedenen Stadien der Hubbewegung des Hebebalkens.

Die erfindungsgemäße Maschine gemäß dem hier gezeigten Ausführungsbeispiel ist zum Transportieren von Fleisch, insbesondere von Wurstbrät, bestimmt, welches mittels eines Wurstbrätbehälters 1 durch einen auf der Oberseite der Maschine angeordneten Vorratstrichter 2 hindurch in das Maschineninnere eingefüllt und dort verarbeitet wird. Zum Anheben des fahrbaren Wurstbrätbehälters vom Boden bis zum Vorratstrichter und zum anschließenden Absenken zurück zum Boden ist ein Hebebalken 3 vorgesehen, der an einem Ende auf einer maschinenfesten horizontalen Achse 4 schwenkbar gelagert ist und an seinem gegenüberliegenden freien Ende eine drehbar gelagerte horizontale Kippachse 5 trägt, an der ein Tragrahmen 6 zur kippbaren und formschlüssigen Halterung des Wurstbrätbehälters 1 befestigt ist. Ein in einem an der Maschine befestigten Antriebsgehäuse 7 untergebrachter Antrieb 8 bewirkt das Anheben und Absenken des Hebebalkens 3.

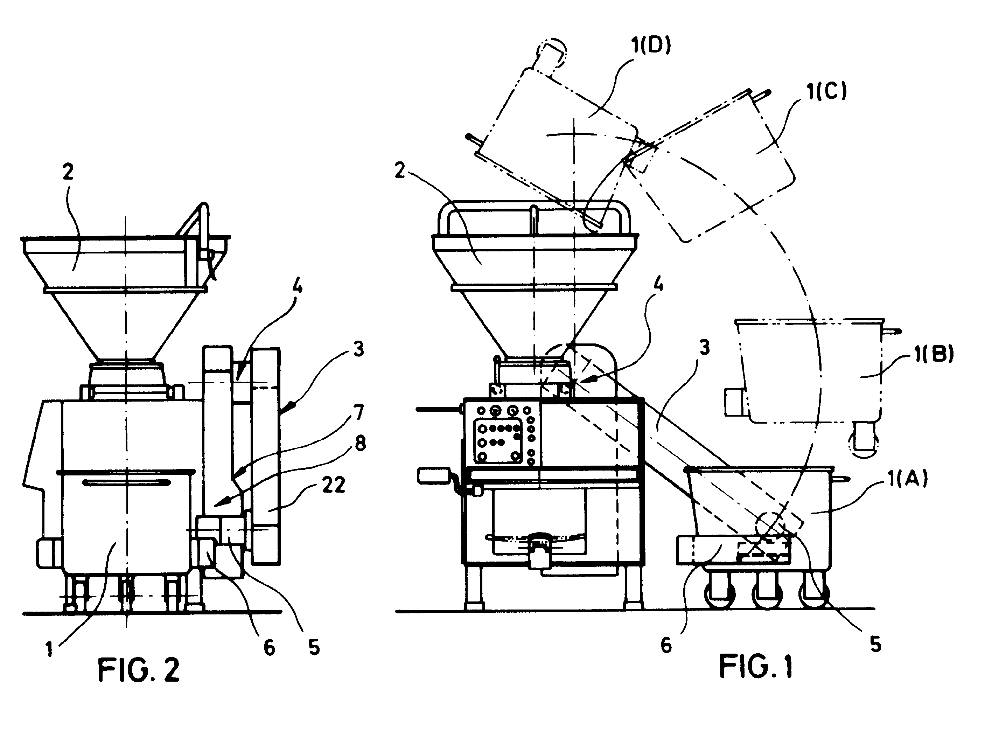

Durch entsprechende Schwenkbewegungen des Hebebalkens 3 wird der Wurstbrätbehälter 1, wie in Fig. 1 dargestellt, von einer Ausgangsstellung A, in der er auf dem Boden steht, entlang einem Kreisbogen nach oben bis in eine Endstellung D oberhalb des Vorratstrichters 2 angehoben und anschließend wieder abgesenkt. Beim Anheben wird der Wurstbrätbehälter 1 bis zur einer Zwischenstellung parallel zu sich selbst, bzw. zum Boden oder im wesentlichen horizontal, gehalten, wie dies die Stellung B in Fig. 1 zeigt, und beim weiteren Anheben in Richtung zur Maschine gekippt. In der mit C bezeichneten Stellung ist der Wurstbrätbehälter 1 bereits etwas über diese Zwischenstellung hinaus angehoben und entsprechend gekippt. In der Stellung D ist der Wurstbrätbehälter 1 soweit gekippt, daß das darin enthaltene Wurstbrät ab- und in den Vorratstrichter 2 einfließt. Beim Absenken des Hebebalkens 3 nimmt der Wurstbrätbehälter 1 in umgekehrter Reihenfolge die genannten Stellungen ein.

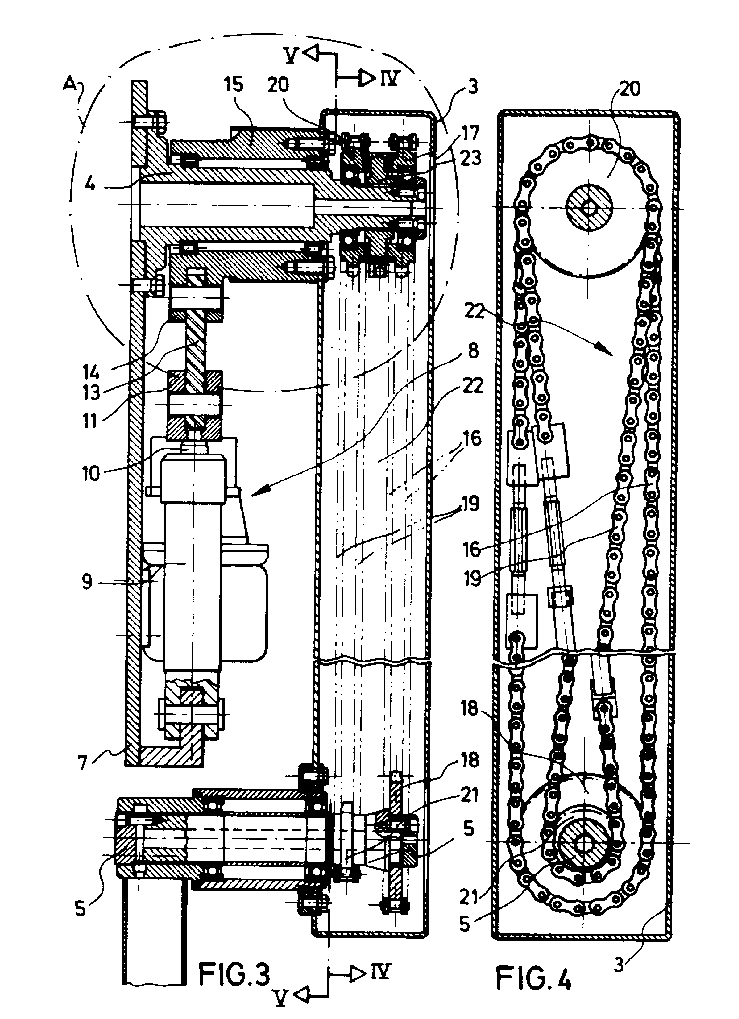

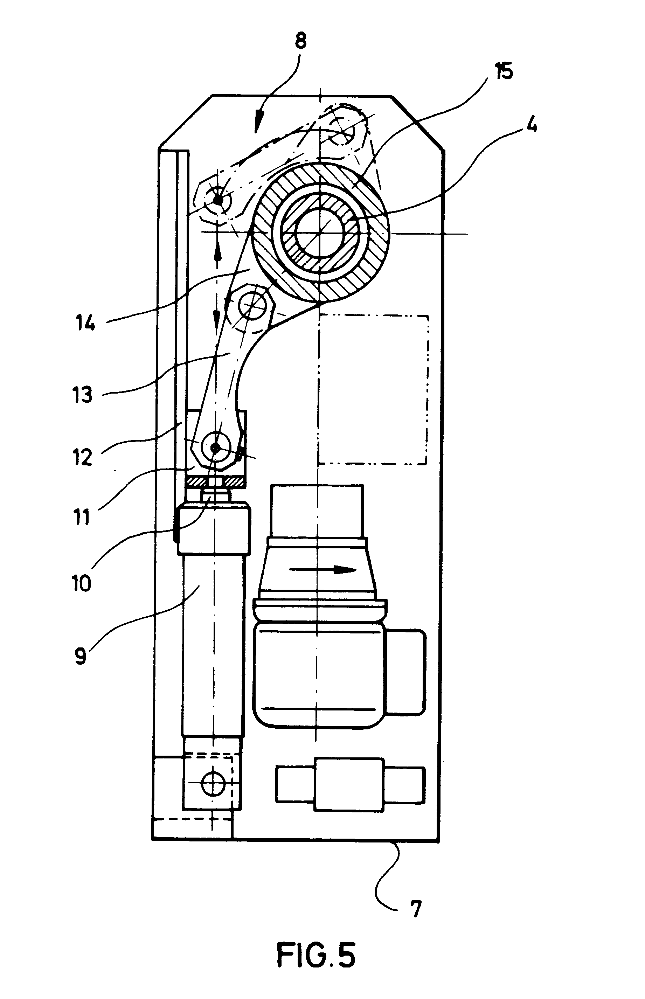

Der Antrieb 8 für die Verschwenkbewegung des Hebebalkens 3 umfaßt, wie in Fig. 3 und 5 gezeigt, eine doppeltwirkende hydraulische Zylinder-Kolbeneinheit 9, die in der unteren Hälfte des an der Maschine unbeweglich befestigten Antriebsgehäuses 7 verankert ist. Die am oberen Ende der Zylinder-Kolbeneinheit 9 herausragende Kolbenstange 10 ist mit ihrem freien Ende an einem Gleitschuh 11 befestigt, der an einer am Antriebsgehäuse 7 und damit maschinenfest angeordneten vertikalen Gleitführung 12 anliegt. Eine Schwinge 13 stellt eine Gelenkverbindung zwischen dem Gleitschuh 12 und einem Kurbelarm 14 her. Letzterer ist am maschinenseitigen Ende einer Hohlachse 15 befestigt, die die maschinenfeste Achse 4 koaxial umgebend mit ihrem maschinenfernen Ende am Hebebalken 3 befestigt ist. Mit dieser Konstruktion wird die lineare Auf- und Abwärtsbewegung der Kolbenstange 10 über die Schwinge 13 und den Kurbelarm 14 in eine Drehbewegung der Hohlachse 15 übersetzt und auf diese Weise die Verschwenkbewegung des Hebebalkens 3 bewirkt. Die Einschaltung der Schwinge 13 ermöglicht eine starre Befestigung der Zylinder-Kolbeneinheit 9 über ihrer Gesamtlänge und somit unter Erzielung des erforderlichen Schwenkwinkels des Kurbelarms 14 eine robuste und platzsparende Bauweise. Die beim Ausfahren der Kolbenstange 10 auf deren oberes Ende von der Schwinge 13 ausgeübten Kippkräfte werden über den Gleitschuh 11 an der vertikalen Gleitführung 12 abgestützt.

Zur Parallelführung sowie zur Durchführung der Kippbewegung des Wurstbrätbehälters 1 während der Verschwenkung des Hebebalkens 3 sind ein erster Kettenzug 16 mit einem Antriebskettenrad 17 und einem Abtriebskettenrad 18 sowie ein zweiter Kettenzug 19 mit einem Antriebskettenrad 20 und einem Abtriebskettenrad 21 vorgesehen. Beide Kettenzüge 16, 19 sind mit ihren Antriebs- und Abtriebskettenrädern 17, 18, 20, 21 innerhalb des Hohlraums 22 des hohl ausgebildeten Hebebalkens 3 angeordnet, wie dies in Fig. 3 und 4 dargestellt ist.

Der erste Kettenzug 16 ist nicht-verschränkt, weist ein Übersetzungsverhältnis von 1:1 auf und ist zur Parallelführung des Wurstbrätbehälters 1 während der Verschwenkung des Hebebalkens 3 vorgesehen. Der zweite Kettenzug 19 mit einer Übersetzung größer als 1 ist verschränkt und bewirkt die Kippbewegung des Wurstbrätbehälters 1 beim Verschwenken des Hebebalkens 3. Die Antriebskettenräder 17 und 20 der beiden Kettenzüge 16 und 19 sind frei drehbar auf der koaxial die Hohlachse 15 durchsetzenden und in den Hohlraum 22 des Hebebalkens 3 hineinragenden maschinenfesten Achse 4 angeordnet. Die Abtriebskettenräder 18, 21 beider Kettenzüge 16, 19 sind undrehbar auf der ebenfalls in den Hohlraum 22 des Hebebalkens 3 hineinragenden Kippachse 5 befestigt. Die beiden Antriebskettenräder 17, 20 und das Abtriebskettenrad 18 des ersten Kettenzuges 16 sind verzahnungtechnisch gleich ausgebildet, während das Abtriebskettenrad 21 des zweiten Kettenzuges 19 eine kleinere Zähnezahl als die anderen Kettenräder 17, 18, 20 aufweist. Gemäß Fig. 3 ist der erste Kettenzug 16 auf der maschinenfernen, d.h. rechten, und der zweite Kettenzug 19 auf der maschinennahen, d.h. linken Seite des Hebebalkens 3 in dessen Hohlraum 22 angeordnet.

Die beiden Antriebskettenräder 17, 20 sind mit gegenseitigem Abstand auf der maschinenfesten Achse 4 frei drehbar gelagert; zwischen ihnen befindet sich eine Kupplungsscheibe 23, die mittels einer Keilwellenprofilanordnung auf der maschinenfesten Achse 4 axial verschiebbar, jedoch undrehbar mit dieser verbunden, angeordnet ist.

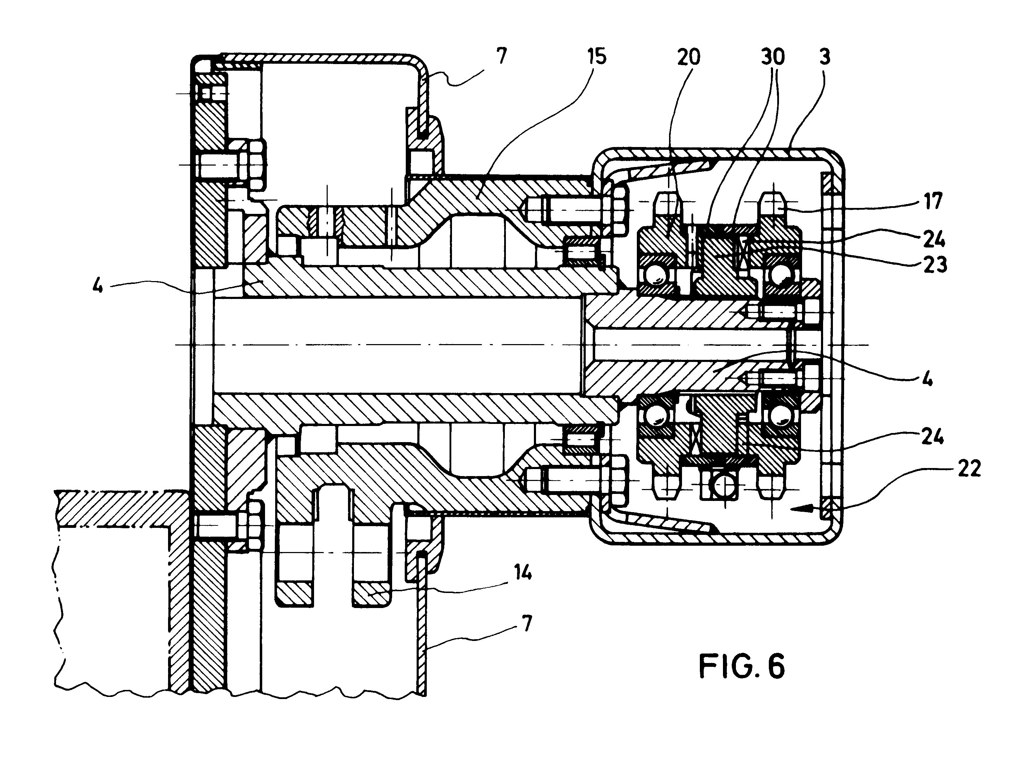

Die Kupplungsscheibe 23 ist auf beiden Seiten und die Antriebskettenräder 17, 20 sind auf der jeweils der Kupplungsscheibe 23 zugewandten Seite mit korrespondierenden Axialverzahnungen 24, wie dies in Fig. 6 angedeutet ist, versehen. Mittels der Axialverzahnungen 24 kann jeweils eines der beiden Antriebskettenräder 17 oder 20 mit der Kupplungsscheibe 23 gekuppelt und auf diese Weise auf der maschinenfesten Achse 4 festgelegt, d.h. unbeweglich gehalten, werden.

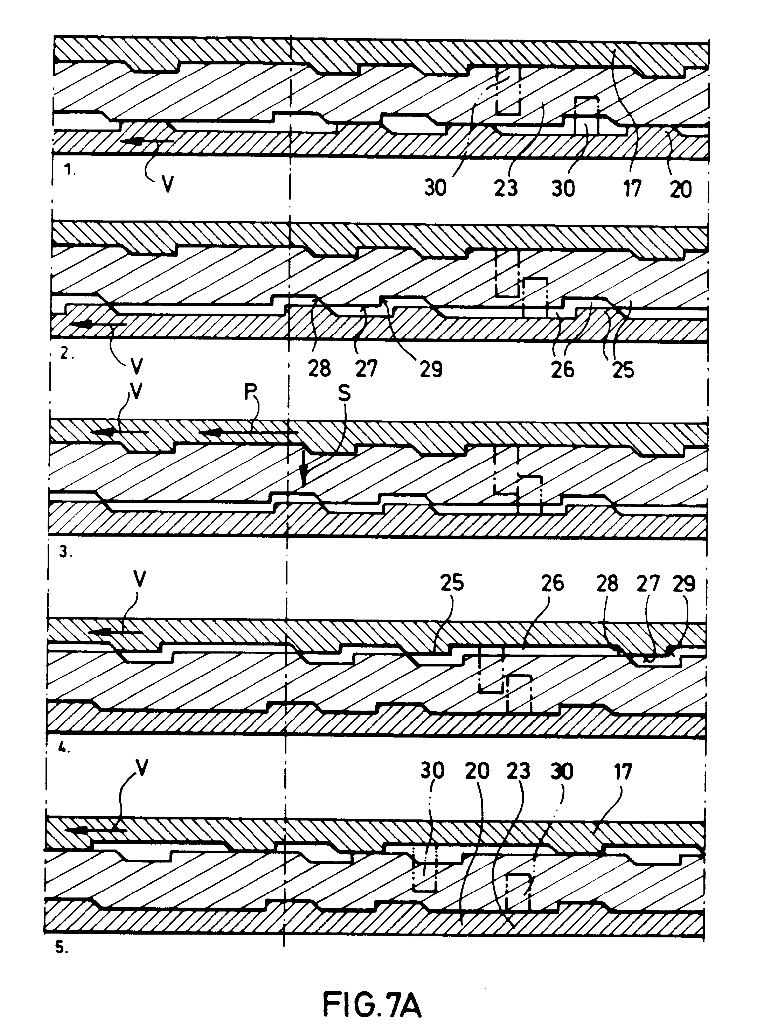

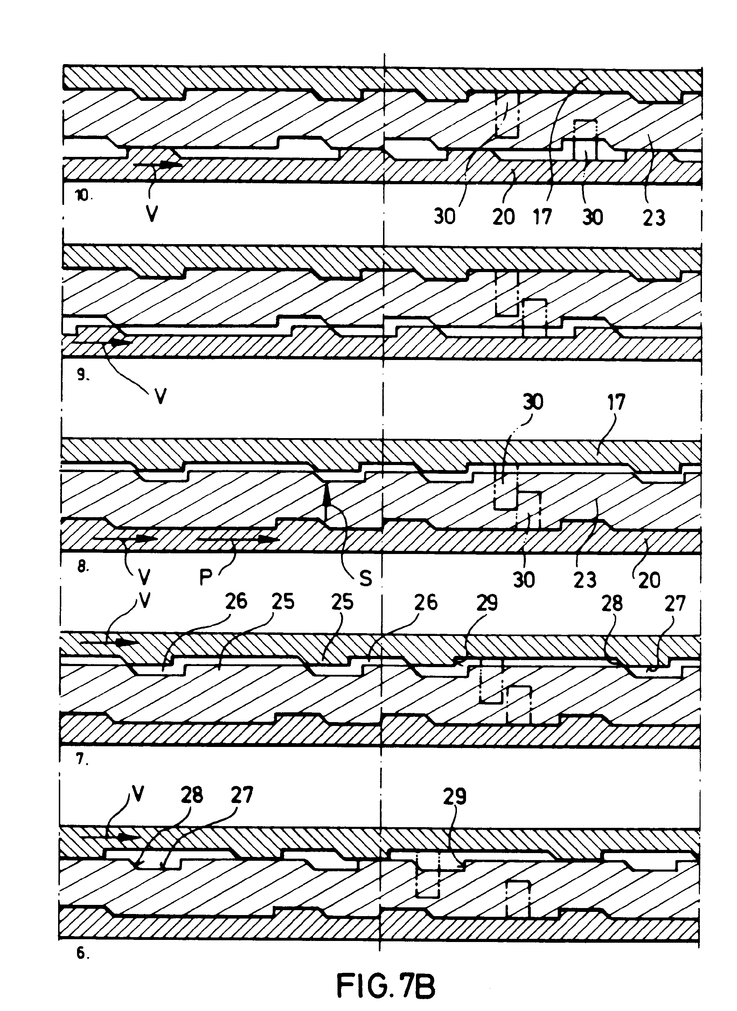

Die Axialverzahnungen 24 an beiden Seiten der Kupplungsscheibe 23 und der dieser jeweils zugewandten Seite der Antriebskettenräder 17 und 20 sind, wie in Fig. 7A und 7B in Form von Abwicklungen gezeigt, jeweils in Art von abgeflachten Sägezähnen 25 ausgebildet, zwischen den sich entsprechende Vertiefungen 26 befinden. Die Abflachungen der Sägezähne 25 sind mit dem Bezugszeichen 27 bezeichnet. Jede Abflachung 27 ist bei Betrachtung in Umfangsrichtung auf der einen Seite über eine Schräge 28 und auf der gegenüberliegenden Seite über eine normal zur Ebene der Kupplungsscheibe 23 und der Antriebskettenräder 17, 20 verlaufende Geradfläche 29 mit der jeweils benachbarten Vertiefung 26 verbunden (der Einfachheit halber sind hierbei lediglich die Begrenzungsflächen 27, 28, 29 der Sägezähne 25 berücksichtigt).

Die Axialverzahnungen 24 sind mit ungleicher Teilung derart ausgebildet, daß nur in einer "bestimmten Relativstellung" derselben ihre Sägezähne 25 und ihre korrespondierenden Vertiefungen 26 sich einander gegenüberstehen und auf diese Weise einen Verzahnungseingriff ermöglichen. Die Breite der Kupplungsscheibe 23 ist derart ausgelegt, daß sie bei vollem Verzahnungseingriff mit einem der Antriebskettenräder 17 oder 20 mit den Abflachungen 27 ihrer Sägezähne 25 an den Abflachungen 27 der Sägezähne 25 des jeweils gegenüberliegenden Antriebskettenrades 20 oder 17 anliegt. Dies gewährleistet, daß die Kupplungsscheibe 23 sich stets nur in vollem Verzahnungseingriff mit einem der beiden Antriebskettenräder befindet und gleichzeitig eine freie Drehung beider Antriebskettenräder auf der maschinenfesten Achse 4 verhindert wird. Gleichzeitig wird ein ruhiger Lauf des gesamten Antriebs erzielt.

An jedem Antriebskettenrad 17, 20 ist radial außerhalb der Kupplungsscheibe 23, diese übergreifend, je ein axial verlaufender Anschlag 30 befestigt. Die Länge dieser Anschläge ist so bemessen, daß sie bei Relativdrehung der Antriebskettenräder 17 und 20 aufeinandertreffen. Ihre Anordnung am jeweiligen Antriebskettenrad ist so gewählt, daß sie dann aufeinandertreffen, wenn sich die Axialverzahnungen 24 der Kupplungsscheibe 23 und des nicht mit dieser im vollen Verzahnungseingriff befindlichen Antriebskettenrades in der vorerwähnten, "bestimmten Relativstellung" befinden, in der ein Verzahnungseingriff dieser beiden Axialverzahnungen 24, d.h. eine axiale Verschiebung der Kupplungsscheibe 23, möglich ist. Beim Auftreffen beider Anschläge 30 wird die Bewegung V des sich relativ zur Kupplungsscheibe 23 drehenden Antriebskettenrades auf das jeweils andere, im Verzahnungseingriff mit der Kupplungsscheibe 23 stehende und somit auf der maschinenfesten Achse 4 festgehaltene Antriebskettenrad übertragen. Die dabei auftretende Schubkraft P wird an den in Richtung dieser Kraft P verlaufenden Schrägen 28 der Sägezähne 25 derart zerlegt, daß eine dabei auftretende axial gerichtete Schubkraft S die Kupplungsscheibe 23 axial bis zum vollen Verzahnungseingriff mit dem gegenüberliegenden Antriebskettenrad verschiebt. Im vorliegenden Ausführungsbeispiel erfolgt somit die Axialverschiebung der Kupplungsscheibe 23 und damit die Umschaltung der Bewegung des Wurstbrätbehälters 1 von der Parallelführung zur Kippbewegung und zurück durch Zwangsschaltung.

Hierbei ist die Breite der Kupplungsscheibe 23 so bemessen, daß sie sich ständig im vollen Verzahnungseingriff mit entweder dem Antriebskettenrad 17 oder dem Antriebskettenrad 20, nicht jedoch gleichzeitig mit beiden, befindet.

Nachstehend ist die Funktion der erfindungsgemäßen Maschine unter Bezugnahme auf die Fig. 7A und 7B beschrieben, in denen anhand von zehn Abwicklungen 1 bis 10 zehn unterschiedliche Stellungen der Kupplungsscheibe 23 relativ zu den Antriebskettenrädern 17, 20 und damit den Winkelstellungen des Hebebalkens 3 dargestellt sind.

Zuerst wird ein mit Wurstbrät gefüllter Wurstbrätbehälter 1 zur erfindungsgemäßen Maschine gefahren und im Austausch gegen einen geleerten Wurstbrätbehälter an der Kippachse 5 des Hebebalkens 3 formschlüssig befestigt. Der Wurstbrätbehälter 1 befindet sind nun in der in Fig. 1 mit (A) dargestellten Ausgangsstellung.

Daraufhin wird die Zylinder-Kolbeneinheit 9 derart betätigt, daß die Kolbenstange 10 ausfährt und über die Schwinge 13 und den Kurbelarm 14 die Hohlachse 15 und damit den Hebebalken 1 nach oben , d.h. in Fig. 1 entgegen dem Uhrzeigersinn, mit Parallelführung des Wurstbrätbehälters 1 verschwenkt. Dabei durchläuft der Wurstbrätbehälter die in Fig. 1 mit (B) bezeichnete Stellung. Die Abwicklung 1 in Fig.7A zeigt die dieser Stellung (B) des Wurstbrätbehälters 1 entsprechende gegenseitige Zuordnung der Kupplungsscheibe 23 und der Antriebskettenräder 17, 20. Die Kupplungsscheibe 23 liegt einerseits mit den Abflachungen 27 ihrer Sägezähne 25 an den Abflachungen 27 der Sägezähne 25 des Antriebskettenrades 20 des zweiten Kettenzuges 19 an und steht andererseits im vollen Verzahnungseingriff mit dem Antriebskettenrad 17 des ersten Kettenzuges 16. Dieses Antriebskettenrad 17 ist somit auf der maschinenfesten Achse 4 festgelegt, so daß das zugeordnete Abtriebskettenrad 18, wie bereits in der Beschreibungseinleitung beschrieben, aufgrund der fehlenden Verschränkung des ersten Kettenzuges 16 und des Übersetzungsverhältnisses 1:1 bei Verschwenkung des Hebebalkens 3 eine dieser Bewegung gleich große Drehbewegung mit entgegengesetztem Drehsinn durchführt, und somit seine Winkelstellung während der Zeitdauer des dargestellten Verzahnungseingriffes nicht ändert. Der Wurstbrätbehälter 1 wird auf diese Weise parallel zu sich selbst geführt. Die Drehbewegung des Abtriebskettenrades 18 wird über die Kippachse 5, das Abtriebskettenrad 21 und den zweiten Kettenzug 19 auf das Antriebskettenrad 20 übertragen, das sich entsprechend der Verschränkung und dem Übersetzungsverhältnis des zweiten Kettenzuges 19 in Richtung des mit V bezeichneten Pfeils dreht.

Diese Drehbewegung bewirkt eine Annäherung des Anschlages 30 des Antriebskettenrades 20 bis zu der in der Abwicklung 2 gezeigten Position, in der die Sägezähne 25 und die Vertiefungen 26 der Axialverzahnung der Kupplungsscheibe 23 den Sägezähnen 25 bzw. Vertiefungen 26 des Antriebskettenrades 20 einander nahezu gegenüberstehen und bei weiterer Drehung des Antriebskettenrades 20 die vorstehend als "bestimmte Relativstellung" der Axialverzahnungen 24 bezeichnete Stellung erreichen, in der ein voller Verzahnungseingriff mit dem Antriebskettenrad 20 möglich ist.

Diese Stellung ist in der Abwicklung 3 gezeigt. Dieser volle Verzahnungseingriff wird dadurch erzielt, daß das drehende Antriebskettenrad 20 im gleichen Moment mit seinem Anschlag 30 auf den Anschlag 30 des im vollen Verzahnungseingriff mit der Kupplungsscheibe 23 stehenden und somit auf der maschinenfesten Achse 4 festgelegten Antriebskettenrades 17 auftrifft und folglich in diesem Antriebskettenrad 17 die Schubkraft P hervorruft, die, wie bereits beschrieben, an den entsprechend verlaufenden Schrägen 28 der Sägezähne 25 zerlegt wird, wobei die axial gerichtete Schubkraft S auftritt und ein axiales Verschieben der Kupplungsscheibe 23 in Richtung zum gegenüberliegenden Antriebskettenrad 20 bewirkt. Dabei löst sich die Kupplungscheibe 23 aus der Verzahnung mit dem Antriebskettenrad 17, tritt in die Verzahnung mit dem Antriebskettenrad 20 ein, wie dies in der Abwicklung 3 gezeigt ist, und gelangt schließlich in den in der Abwicklung 4 dargestellten vollen Verzahnungseingriff mit dem Antriebskettenrad 20. Durch diesen Verzahnungseingriff wird das Antriebskettenrad 20 auf der maschinenfesten Achse festgelegt, ist also stillstehend. Das zugeordnete Abtriebskettenrad 21 vollführt, wie bereits beschrieben, aufgrund der Verschränkung des zweiten Kettenzuges 19 und dessen Übersetzungsverhältnis bei weiterer Verschwenkung des Hebebalkens 3 eine dessen Bewegung entgegengesetzt gerichtete schnellere Drehbewegung und somit ein Kippen des Wurstbrätbehälters 1 in Richtung zum Vorratstrichter 2. Diese Drehbewegung des Abtriebskettenrades wird über die Kippachse 5, das Abtriebskettenrad 18 und den ersten Kettenzug 16 auf das Antriebskettenrad 20 übertragen, das sich dementsprechend in der mit dem Pfeil V bezeichneten Richtung dreht.

Die Abwicklung 3 zeigt somit den Beginn und die Abwicklung 4 den Abschluß der Umschaltung der Parallelführung des Wurstbrätbehälters 1 auf seine Kippbewegung. Dieser Umschaltzeitpunkt entspricht der in Fig. 1 zwischen den beiden Stellungen (B) und (C) angeordneten Zwischenstellung (nicht gezeigt) des Wurstbrätbehälters 1.

Bei weiterem Hochschwenken des Hebebalkens 3 und damit Drehung des Antriebskettenrades 17 gelangt dieses in die in den Abwicklungen 5 und 6 gezeigte Stellung relativ zur Kupplungsscheibe 23, in der letztere mit den Abflachungen 27 ihrer Sägezähne 25 an den Abflachungen 27 der Sägezähne 25 des Antriebskettenrades 17 anliegt. Gleichzeitig befindet sich die Kolbenstange 10 der Zylinder-Kolbeneinheit und damit der Hebebalken 3 in der in Fig. 5 anhand der gestrichelt dargestellten Schwinge 13 angedeuteten Endstellung. Diese Endstellung, die der in Fig. 1 (mit D) bezeichneten Endstellung des Wurstbrätbehälters 1 entspricht. In dieser Endstellung kann das Wurstbrät aus dem Wurstbrätbehälter 1 aus- und durch den Vorratstrichter 2 in das Maschineninnere einfließen.

Sobald der Wurstbrätbehälter 1 geleert ist, wird der umgeschaltet, d.h. die Kolbenstange 10 in die Zylinder-Einheit 9 eingefahren, die Absenkbewegung des Hebebalkens 3 eingeleitet und die Drehbewegung des Antriebskettenrades 10 umgekehrt. Die Bewegung des letzteren ist in der Abwicklung 6 durch den mit V bezeichneten Pfeil angedeutet.

Die Umschaltung der Kippbewegung des Wurstbrätbehälters 1 auf dessen Parallelführung beim Absenken des Hebebalkens 3 erfolgt in gleicher Weise wie bei dessen vorhergehender Hubbewegung, jedoch in umgekehrter Reihenfolge. Die Abwicklungen 6 bis 10 in Fig. 7B zeigen die dabei auftretenden Relativstellungen der Antriebskettenräder 17, 20 und der Kupplungsscheibe 23, das Aufeinandertreffen der Anschläge 30, die Richtung der dabei auftretenden Schubkräfte P und S sowie den Wechsel der Drehbewegung vom einen zum anderen Antriebskettenrad. Eine Beschreibung der Abwicklungen 6 bis 10 erübrigt sich für den Fachmann, da sie in Umkehrung des Auftretens und der Richtung der Bewegungen V und der Schubkräfte P und S der Antriebskettenräder den Abwicklungen 5 bis 1 entsprechen. Beispielsweise zeigt Abwicklung 8, in Umkehrung der in Fig. 3 gezeigten Umschaltung der Parallelführung des Wurstbrätbehälters 1 auf dessen Kippbewegung, seine Umschaltung von der Kippbewegung auf die Parallelführung.

Nach Erreichen der untersten Endstellung des Hebebalkens 3 bzw. der Ausgangsstellung des Wurstbrätbehälters 1 wird dieser von der Kippachse 5 entfernt und gegen einen neuen, gefüllten Wurstbrätbehälter 1 ausgetauscht. Daraufhin kann der beschreibene Zyklus erneut durchgeführt werden.

In der Praxis möglicherweise auftretende ungleichmäßige Befüllungen des Wurstbrätbehälters mit Wurstbrät können dazu führen, daß der Schwerpunkt des gefüllten Behälters so verschoben wird, daß er mit Abstand seitlich von der Kippachse 5 angeordnet ist. Demzufolge tritt beim Anheben des Wurstbrätbehälters vom Boden bereits in der Phase der Parallelführung ein entweder links- oder rechtsgerichtetes Kippmoment um die Kippachse und damit eine entsprechend gerichtete Kraft im ersten Kettenzug 16 auf. Keine dieser Kräfte führt jedoch zu einem verfrühten Umschalten von der Parallelführung auf die Kippbewegung des Wurstbrätbehälters. Im Falle einer in den Abwicklungen nach Fig. 7A unf 7B nach rechts gerichteten Kraft im Antriebskettenrad 17 stützt sich letzteres an den Geradflächen 29 der Sägezähne 25 der Kupplungsscheibe 23 ab und es tritt keine axial auf diese Scheibe 23 wirkende Schubkraft auf. Der Umschaltvorgang erfolgt im rechten Zeitpunkt durch die Anschläge 30 bei deren Aufeinandertreffen. Im Falle einer nach links gerichteten Kraft im Antriebskettenrad 17 stützt sich letzteres an den Schrägflächen 28 ab; die dabei auftretende axial wirkende Schubkraft führt jedoch erst zum gewünschten Zeitpunkt zum Umschalten, nämlich dann, wenn die Axialverzahnungen sich in der in der Abwicklung 3 der Fig. 7A gezeigten "bestimmten Relativstellung" gegenüberstehen.

Es besteht aber auch die Möglichkeit, die Umschaltung von der Parallelführung auf die Kippbewegung dann ohne Verwendung der Anschläge vorzunehmen, wenn infolge entsprechender Gewichtsverteilung des Wurstbrätbehälters selbst dessen Schwerpunkt auch bei voller Füllung mit Wurstbrät ein Kippmoment um die Kippachse in Richtung der Schrägen 28 und damit eine nach links gerichtete Kraft im Antriebskettenrad 17 hervorruft.

## Patentansprüche

1. Maschine zum Transportieren von Fleisch, insbesondere von Wurstbrät, mit einem auf der Oberseite der Maschine angeordneten Vorratstrichter, ferner mit einem auf einer maschinenfesten horizontalen Achse schwenkbar gelagerten Hebebalken, an welchem eine horizontal angeordnete Kippachse drehbar gelagert ist, an welcher ein Tragrahmen für einen fahrbaren Wurstbrätbehälter kippbar befestigt ist, **dadurch gekennzeichnet**, daß von der maschinenfesten Achse (4) zur Kippachse (5) ein erster, den Wurstbrätbehälter (1) beim Anheben und Absenken des Hebebalkens (3) parallel zu sich selbst führender Kettenzug (16) mit einer Übersetzung 1 : 1, und außerdem ein zweiter, das Kippen des Wurstbrätbehälters (1) bewirkender verschränkter Kettenzug (19) mit einer Übersetzung größer als 1 geführt sind, wobei die Antriebskettenräder (17, 20) auf der maschinenfesten Achse (4) frei drehbar, jedoch wechselweise mit dieser kuppelbar gelagert sind, während die Abtriebskettenräder (18, 21) auf der Kippachse (5) undrehbar befestigt sind.

2. Maschine nach Anspruch 1, **dadurch gekennzeichnet**, daß die beiden Antriebskettenräder (17, 20) und eines der Abtriebskettenräder (18) verzahnungstechnisch gleich ausgebildet sind, während das zum zweiten Kettenzug (19) gehörende Kettenrad (21) eine kleinere Zähnezahl als die anderen Kettenräder (17, 18, 20) aufweist.

3. Maschine nach Anspruch 1 oder 2, **dadurch gekennzeichnet**,daß die beiden Antriebskettenräder (17, 20) auf der maschinenfesten Achse (4) im Abstand zueinander gelagert sind und zwischen den beiden Antriebskettenrädern (17, 20) eine mit der Achse (4) undrehbar verbundene, aber axial verschiebbare Kupplungsscheibe (23) angeordnet ist.

4. Maschine nach Anspruch 3, **dadurch gekennzeichnet**, daß die Kupplungscheibe (23) auf beiden Seiten und die Antriebskettenräder (17, 20) auf der jeweils der Kupplungsscheibe (23) zugewandten Seite korrespondierende Axialverzahnungen (24) aufweisen und die maximale Breite der Kupplungsscheibe (23) etwa dem Abstand zwischen den beiden Antriebskettenrädern (17, 20) entspricht.

5. Maschine nach Anspruch 4, **dadurch gekennzeichnet**, daß die Axialverzahnungen (24) in der Art von abgeflachten Sägezähnen (25) ausgebildet sind, wobei die Schrägen (28) der Sägezähne (25) der jeweils im Verzahnungseingriff befindlichen Axialverzahnungen (24) der Kupplungsscheibe (23) und jeweils eines der Antriebskettenräder in Richtung einer in dem in diesem Antriebskettenrad auftretenden Kraft verlaufen, die Kupplungsscheibe (23) mit den Abflachungen (27) ihrer Sägezähne (25) an den Abflachungen (27) der Sägezähne (25) des jeweils anderen Antriebskettenrades anliegt, und die Axialverzahnungen (24) derart mit ungleicher Teilung ausgebildet sind, daß nur in bestimmten Relativstellungen der einander zugewandten Axialverzahnungen (24) eine Verzahnungseingriff möglich ist.

6. Maschine nach Anspruch 5, **dadurch gekennzeichnet**, daß die Kraft eine beim Verschwenken des Hebebalkens (3) in dem mit der Kupplungsscheibe (23) in Verzahnungseingriff befindlichen Antriebskettenrad auftretende, vom jeweiligen Kettenzug ausgeübte Zugkraft ist und ein selbsttätiges Umschalten der Kupplungsscheibe bis zum Verzahnungseingriff mit dem jeweils anderen Antriebskettenrad bewirkt.

7. Maschine nach Anspruch 5 oder 6, **dadurch gekennzeichnet**, daß die Kraft eine als Ergebnis des Aufeinandertreffens von zwei Anschlägen (30) auftretende Schubkraft ist, wobei die Anschläge (30) an den beiden Antriebskettenrädern (17, 20) befestigt sind und beim Aufeinandertreffen am Ende der Relativbewegung der Antriebskettenräder ein zwangsweises Umschalten der Kupplungsscheibe (23) bewirken.

8. Maschine nach mindestens einem der Ansprüche 1 bis 7, **dadurch gekennzeichnet**, daß das Antriebskettenrad (17) und/oder das Abtriebskettenrad (18) wenigstens einer (16) der beiden Kettenzüge (16, 19) winkelverstellbar auf der zugeordneten Achse (4, 5) befestigt ist.

9. Maschine nach mindestens einem der Ansprüche 1 bis 8, **dadurch gekennzeichnet**, daß der Hebebalken (3) hohl ausgebildet ist und die beiden Kettenzüge (16, 19) mit ihren Kettenrädern (17, 18, 20, 21) und Achsen (4, 5) im Hohlraum (22) angeordnet sind.

10. Maschine nach mindestens einem der Ansprüche 1 bis 9, **dadurch gekennzeichnet**, daß der Tragrahmen (6) für die Aufnahme des Wurstbrätbehälters (1) formschlüssig mit diesem verbindbar ist.

11. Maschine nach mindestens einem der Ansprüche 1 bis 10, **dadurch gekennzeichnet**, daß am maschinenseitigen Ende des Hebebalkens (3) eine die maschinenfeste Achse (4) einschließende Hohlachse (15) befestigt ist, an deren Ende ein Kurbelarm (14) angebracht ist, an welchem die Kolbenstange (10) einer hydraulischen Zylinder-Kolbeneinheit (9) angreift.

12. Maschine nach Anspruch 11, **dadurch gekennzeichnet**, daß zwischen dem Kurbelarm (14) und dem Ende der Kolbenstange (10) eine Schwinge (13) eingeschaltet ist.

13. Maschine nach Anspruch 12, **dadurch gekennzeichnet**, daß zwischen der Schwinge (13) und dem Ende der Kolbenstange (10) ein Gleitschuh (11) eingeschaltet ist, der an einer an der Maschine befestigten vertikalen Gleitführung (12) anliegt.

14. Maschine nach mindestens einem der Ansprüche 11 bis 13, **dadurch gekennzeichnet**, daß der gesamte Antrieb (8) für den Hebebalken (3) in einem an der Maschine angebrachten Gehäuse (7) angeordnet ist, in welches ein Ende der Hohlachse (15) ragt.

## Claims

1. Machine for transporting meat, in particular sausagemeat, with a feed hopper arranged on the upper side of the machine, and also with a lifting beam which is mounted pivotally on a horizontal shaft fixed to the machine and on which is rotatably mounted a horizontal tilt shaft to which a supporting frame for a mobile sausage-meat container is attached tiltably, characterised in that a first chain (16) which moves the sausage-meat container (1) parallel to itself during lifting and lowering of the lifting beam (3), with a transmission ratio of 1:1, and moreover a second crossed chain (19) which causes tipping of the sausage-meat container (1), with a transmission ratio greater than 1, extend from the shaft (4) fixed to the machine to the tilt shaft (5), wherein the driving sprockets (17, 20) are mounted freely rotatably on the shaft (4) fixed to the machine but capable of being coupled thereto alternately, while the driven sprockets (18, 21) are mounted non-rotatably on the tilt shaft (5).

2. Machine according to claim 1, characterised in that the two driving sprockets (17, 20) and one of the driven sprockets (18) are designed the same with respect to teeth, while the sprocket (21) belonging to the second chain (19) has a smaller number of teeth than the other sprockets (17, 18, 20).

3. Machine according to claim 1 or 2, characterised in that the two driving sprockets (17, 20) are mounted at a distance from each other on the shaft (4) fixed to the machine and between the two driving sprockets (17, 20) is arranged a clutch plate (23) which is non-rotatably connected to the shaft (4) but axially displaceable.

4. Machine according to claim 3, characterised in that the clutch plate (23) on both sides and the driving sprockets (17, 20) each on the side facing towards the clutch plate (23) comprise corresponding axial teeth (24), and the maximum width of the clutch plate (23) approximately corresponds to the distance between the two driving sprockets (17, 20).

5. Machine according to claim 4, characterised in that the axial teeth (24) are designed after the fashion of flat-topped sawteeth (25), wherein the sloping faces (28) of the sawteeth (25) of the clutch plate axial teeth (24) which are engaged at any given time and of one of the driving sprockets extend ,in the direction of a force arising in this driving sprocket, the clutch plate (23) lies with the flat tops (27) of its sawteeth (25) adjacent to the flat tops (27) of the sawteeth (25) of the other driving sprocket, and the axial teeth (24) are designed in such a way with unequal pitch that only in "certain relative positions" of the axial teeth (24) facing towards each other is engagement possible.

6. Machine according to claim 5, characterised in that the force is a tensile force which arises in the driving sprocket which is engaged with the clutch plate (23) during pivoting of the lifting beam (3) and is exerted by the respective chain and which causes automatic shifting of the clutch plate until it engages with the other driving sprocket.

7. Machine according to claim 5 or 6, characterised in that the force is a shearing force arising as a result of two stops (30) impinging on each other, wherein the stops (30) are attached to the two driving sprockets (17, 20) and cause positive shifting of the clutch plate (23) during impingement at the end of relative movement of the driving sprockets.

8. Machine according to one or more of claims 1 to 7, characterised in that the driving sprocket (17) and/or the driven sprocket (18) of at least one (16) of the two chains (16, 19) is angularly adjustably mounted on the associated shaft (4, 5).

9. Machine according to one or more of claims 1 to 8, characterised in that the lifting beam (3) is hollow and the two chains (16, 19) are mounted with their sprockets (17, 18, 20, 21) and shafts (4, 5) in the cavity (22).

10. Machine according to one or more of claims 1 to 9, characterised in that the supporting frame (6) for holding the sausage-meat container (1) can be connected thereto in form-locking relationship.

11. Machine according to one or more of claims 1 to 10, characterised in that attached to the machine end of the lifting beam (3) is a hollow shaft (15) which encompasses the shaft (4) fixed to the machine and at the end of which is mounted a crank arm (14) which is engaged by the piston rod (10) of a hydraulic piston and cylinder unit (9).

12. Machine according to claim 11, characterised in that between the crank arm (14) and the end of the piston rod (10) is inserted a link (13).

13. Machine according to claim 12, characterised in that between the link (13) and the end of the piston rod (10) is inserted a sliding block (11) which abuts against a vertical slideway (12) attached to the machine.

14. Machine according to one or more of claims 11 to 13, characterised in that the whole drive (8) for the lifting beam (3) is arranged in a housing (7) which is mounted on the machine and into which extends one end of the hollow shaft (15).

**Revendications**

1. Machine pour le transport de viande, en particulier de chair à saucisse, comprenant une trémie d'alimentation disposée à la face supérieure de la machine, ainsi qu'une poutre de levage montée de manière pivotante sur un axe horizontal solidaire de la machine sur laquelle est monté de manière tournante un axe d'inclinaison horizontal sur lequel est fixé de manière basculante un cadre porteur pour un réservoir de chair à saucisse mobile, **caractérisée en ce** qu'entre l'axe (4) solidaire de la machine et l'axe d'inclinaison (5) est installé un premier palan à chaîne (16) avec un rapport de transmission de 1:1 qui guide le réservoir de chair à saucisse (1) parallèlement à lui-même lors de la montée et de la descente de la poutre de levage (3), et qu'il est prévu, en plus, un second palan à chaîne (19) croisé avec un rapport de transmission supérieur à 1 qui assure le basculement du réservoir de chair à saucisse (1), les roues à chaîne d'entraînement (17, 20) sur l'axe (4) solidaire de la machine étant montées de façon à pouvoir tourner librement mais à pouvoir être couplées alternativement avec celui-ci, tandis que les roues à chaîne de sortie (18, 21) sur l'axe d'inclinaison (5) sont montées de manière rigide en rotation.

2. Machine selon la revendication 1, caractérisée en ce que les deux roues à chaîne d'entraînement (17, 20) et l'une des roues à chaîne de sortie (18) présentent des dentures identiques, tandis que la roue à chaîne (21) appartenant au second palan à chaîne (19) présente un nombre de dents inférieur à celui des autres roues à chaîne (17, 18, 20).

3. Machine selon l'une des revendications 1 ou 2, caractérisée en ce que les deux roues à chaîne d'entraînement (17, 20) sur l'axe (4) solidaire de la machine sont montées à distance l'une de l'autre, et qu'entre les deux roues à chaîne d'entraînement (17, 20) est disposé un disque d'embrayage (23) solidaire en rotation avec l'axe (4), mais mobile dans le sens axial.

4. Machine selon la revendication 3, caractérisée en ce que des dentures axiales (24) conjuguées sont prévues sur les deux côtés du disque d'embrayage (23) et sur le côté des roues à chaîne d'entraînement (17, 20) respectivement dirigé vers le disque d'embrayage (23), et que la largeur maximale du disque d'embrayage (23) correspond sensiblement à la distance entre les deux roues à chaîne d'entraînement (17, 20).

5. Machine selon la revendication 4, caractérisée en ce que les dentures axiales (24) sont réalisées à la manière de dents de scie (25) aplaties, les chanfreins (28) des dents de scie (25) des dentures axiales (24) respectivement en prise du disque d'embrayage (23) et de respectivement l'une des roues à chaîne d'entraînement s'étendant dans la direction d'une force agissant dans cette roue à chaîne d'entraînement, le disque d'embrayage (23) étant appliqué avec les aplatissements (27) de ses dents de scie (25) contre les aplatissements (27) des dents de scie (25) de l'autre roue à chaîne d'entraînement, et les dentures axiales (24) présentant des pas différents de telle façon qu'une mise en prise des dentures axiales (24) dirigées l'une vers l'autre n'est possible que dans certaines positions relatives de celles-ci.

6. Machine selon la revendication 5, caractérisée en ce que la force qui se manifeste, lors du pivotement de la poutre de levage (3), dans la roue à chaîne d'entraînement en prise avec le disque d'embrayage (23) est une force de traction exercée par le palan à chaîne respectif et provoque une commutation automatique du disque d'embrayage jusqu'à la mise en prise avec respectivement l'autre roue à chaîne d'entraînement.

7. Machine selon l'une des revendications 5 ou 6, caractérisée en ce que la force est une poussée qui résulte de la rencontre de deux butées (30), les butées (30) étant fixées sur les deux roues à chaîne d'entraînement (17, 20) et leur venue en contact à la fin du mouvement relatif desdites roues à chaîne d'entraînement provoquant une commutation forcée du disque d'embrayage (23).

8. Machine selon l'une des revendications 1 à 7, caractérisée en ce que la roue à chaîne d'entraînement (17) et/ou la roue à chaîne de sortie (18) d'au moins l'un (16) des deux palans à chaîne (16, 19) est montée sur l'axe associé (4, 5) de façon à permettre un réglage de la position angulaire.

9. Machine selon l'une des revendications 1 à 8, caractérisée en ce que la poutre de levage (3) est creuse et que les deux palans à chaîne (16, 19) sont logés, avec leurs roues à chaîne (17, 18, 20, 21) et leurs axes (4, 5), dans la cavité (22).

10. Machine selon l'une des revendications 1 à 9, caractérisée en ce que le cadre porteur (6) pour la réception du réservoir de chair à saucisse (1) peut être raccordé à engagement positif à celui-ci.

11. Machine selon l'une des revendications 1 à 10, caractérisée en ce qu'à l'extrémité côté machine de la poutre de levage (3) est monté un arbre creux (15) qui enveloppe l'axe (4) solidaire de la machine et dont l'autre extrémité porte une manivelle (14) sur laquelle est articulée la tige de piston (10) d'un système hydraulique de cylindre-piston (9).

12. Machine selon la revendication 11, caractérisée en ce qu'entre la manivelle (14) et l'extrémité de la tige de piston (10) est intercalée une bielle oscillante (13).

13. Machine selon la revendication 12, caractérisée en ce qu'entre la bielle oscillante (13) et l'extrémité de la tige de piston (10) est intercalé un patin de guidage (11) qui est appliqué contre une coulisse verticale (12) montée sur la machine.

14. Machine selon l'une des revendications 11 à 13, caractérisée en ce que l'ensemble du système d'entraînement (8) pour la poutre de levage (3) est disposé dans un carter de commande (7) monté sur la machine dans lequel dépasse l'une des extrémités de l'arbre creux (15).

FIG. 1

FIG. 2

FIG.3

FIG.4

**FIG.5**

FIG.6

FIG.7A

FIG.7B